# EUROPÄISCHE PATENTSCHRIFT

(11) **EP 3 384 168 B1**
(45) Veröffentlichungstag und Bekanntmachung des Hinweises auf die Patenterteilung: **15.09.2021**
(21) Anmeldenummer: 16801729.1
(22) Anmeldetag: 17.11.2016
(51) Int. Cl.: F16B 11/00, F16B 7/04

(54) **VERFAHREN ZUR HERSTELLUNG EINER BAUGRUPPE**
METHOD FOR PRODUCING AN ASSEMBLY
PROCEDE DE FABRICATION D'UN ENSEMBLE

(30) Priorität: 02.12.2015 DE 102015223962
(43) Veröffentlichungstag der Anmeldung: 10.10.2018
(73) Patentinhaber: Bayerische Motoren Werke Aktiengesellschaft, 80809 München (DE)
(72) Erfinder: SUTTER, Nathanael, 85635 Höhenkirchen (DE); LUGER, Andreas, 93480 Hohenwarth (DE)
(86) Internationale Anmeldenummer: PCT/EP2016/077917
(87) Internationale Veröffentlichungsnummer: WO 2017/093025

(56) Entgegenhaltungen:
- WO-A1-98/55771
- DE-A1- 10 118 791

## Beschreibung

Die vorliegende Erfindung betrifft ein Verfahren zur Herstellung einer Baugruppe, die aus mindestens drei Bauteilen ausgebildet ist.

Im zeitgenössischen Automobilbau wird eine Reduzierung des Gesamtgewichts angestrebt, um Verbrauchs- und Emissionswerte auf ein Mindestmaß herabzusetzen. Dabei kommen neue Werkstoffe zum Einsatz, die leichter sind als die bisher verwendeten Metalle. Insbesondere zur Ausbildung von Karosseriebauteilen, wie beispielsweise Klappen, Kotflügeln, Dächern, usw., bietet sich die Verwendung von Kunststoff an. Zur Erzielung mechanisch hoher Eigenschaften werden faserverstärkte Kunststoffe verwendet. Solche Kunststoffe weisen eine Matrix aus einem duroplastischen oder auch thermoplastischen Kunststoff auf, in deren Inneren Verstärkungsfasern, insbesondere Kohlenstofffasern oder Glasfaser, eingebettet sind.

Zur Verbindung solcher Bauteile eignen sich kalte Fügetechniken, wie Nieten, Schrauben, usw. Darüber hinaus können bei der industriellen Fertigung die Bauteile auch miteinander verklebt werden. Insbesondere die Verklebung von Baugruppen mit mehreren Bauteilen gestaltet sich schwierig, da hier eine bestimmte Reihenfolge der zu verklebenden Bauteile eingehalten werden muss. Alternativ können die Bauteile auch gleichzeitig verklebt werden, wobei sich jedoch geometrisch komplexe Klebstoffnähte ergeben. Je komplexer die Geometrie der Klebstoffnaht ist, desto schwieriger gestaltet sich die prozesssichere Verklebung, da die Gefahr von Einschlüssen bzw. unvollständiger Verklebung hoch ist.

Die Offenlegungsschrift DE 101 18 791 A1 zeigt ein Verbindungselement für Hohlprofile, wobei die zu verbindenden Profile eine auf Gehrung geschnittene Stoßkante aufweisen und das Verbindungselement eine mit dem Hohlprofilquerschnitt derart korrespondierende Form aufweist, dass ein Schenkel des Verbindungselements in das zugeordnete Hohlprofil einschiebbar und mit Befestigungsmitteln festlegbar ist, wobei weiterhin Bohrungen in mindestens einem Hohlprofil vorgesehen sind, über die ein Klebstoff einfüllbar ist.

Die WO 98/55771 A1 betrifft ein in Sandwichbauweise hergestelltes Verbindungselement für eine geklebte Verbindung an einem Fachwerksknoten eines Flächen- oder Raumfachwerks, insbesondere für die Luft- oder Raumfahrt.

Aufgabe der vorliegenden Erfindung ist es, ein Verfahren anzugeben, mit dem die Nachteile des Standes der Technik überwunden werden. Es ist eine spezielle Aufgabe der vorliegenden Erfindung ein Verfahren zur Herstellung einer Baugruppe anzugeben, das sich durch hohe Prozesssicherheit auszeichnet.

Diese Aufgabe wird durch ein Verfahren mit den Merkmalen des unabhängigen Patentanspruchs 1 gelöst. Vorteilhafte Ausführungsformen sind in den abhängigen Patentansprüchen angegeben.

Zur Lösung dieser Aufgabe lehrt die Erfindung ein Verfahren zur Herstellung einer Baugruppe, wobei die Baugruppe zumindest drei Bauteile umfasst, mit den Schritten
- Erzeugen einer Zusammenbaugruppe aus einem ersten Bauteil, einem zweiten Bauteil und einem dritten Bauteil, wobei die drei Bauteile in einer vorbestimmten Position zueinander angeordnet sind,
- Erzeugen einer ersten Klebstoffverbindung zwischen dem zweiten Bauteil und dem dritten Bauteil, und
- Erzeugen einer zweiten Klebstoffverbindung zwischen dem ersten Bauteil und dem zweiten Bauteil.

Durch die Erzeugung einer Klebstoffverbindung in einem zweistufigen Verfahren kann eine besonders prozesssichere Verklebung erzeugt werden.

Weiterhin wird beim Erzeugen der Zusammenbaugruppe eine Kavität zwischen den Bauteilen ausgebildet . Diese Kavität umfasst einen ersten Bereich, der im Wesentlichen zwischen dem zweiten Bauteil und dem dritten Bauteil verläuft, und einen zweiten Bereich, der im Wesentlichen zwischen dem zweiten Bauteil und dem ersten Bauteil verläuft. In diesem Zusammenhang bedeutet im Wesentlichen, dass der erste Bereich und der zweite Bereich nicht notwendigerweise diskret voneinander abgetrennt sind, sondern in Randbereichen auch ineinander übergehen können.

Weiterhin weist das zweite Bauteil einen Durchbruch auf, wobei zur Erzeugung der ersten Klebstoffverbindung ein Klebstoff durch diesen Durchbruch hindurch in den ersten Bereich der Kavität eingebracht wird.

Vorteilhafterweise kann somit der Klebstoff auf einer ersten Seite der Baugruppe zugeführt werden, wobei sich die erste Klebstoffverbindung im Bereich einer Seite ausbildet, die der ersten Seite des Bauteils abgewandt ist.

Zusätzlich weist das erste Bauteil einen Durchbruch auf, wobei zur Erzeugung der zweiten Klebstoffverbindung ein Klebstoff durch diesen Durchbruch des ersten Bauteils in den zweiten Bereich der Kavität eingebracht wird. Auch hier kann vorteilhafterweise über einen Zugang auf einer Seite der Bauteilgruppe eine Klebstoffverbindung im Inneren der Bauteilgruppe erzeugt werden.

Zum Herstellen der Baugruppe wird zuerst die erste Klebstoffverbindung und danach die zweite Klebstoffverbindung erzeugt . Vorteilhafterweise wird die Gefahr von Lufteinschlüssen in der Klebstoffverbindung reduziert.

Der erste Bereich der Kavität kann auf einer Seite des zweiten Bauteils liegen, die dem ersten Bauteil abgewandt ist. Der zweite Bereich der Kavität kann auf einer Seite des zweiten Bauteils liegen, die dem ersten Bauteil zugewandt ist.

In einer weiteren alternativen Ausführungsform können das im Vorhergehenden beschriebene erste Bauteil und das dritte Bauteil integral bzw. einstückig ausgebildet sein. Ein Verfahren zur Herstellung einer solchen Baugruppe mit zumindest zwei Bauteilen umfasst die Schritte:
- Erzeugen einer Zusammenbaugruppe aus einem ersten Bauteil und einem zweiten Bauteil, wobei die Bauteile in einer vorbestimmten Position zueinander angeordnet sind,
- Erzeugen einer ersten Klebstoffverbindung zwischen einem ersten Abschnitt des ersten Bauteils und dem zweiten Bauteil, und
- Erzeugen einer zweiten Klebstoffverbindung zwischen einem zweiten Abschnitt des ersten Bauteils und dem zweiten Bauteil.

Auch in dem Verfahren gemäß dieser Ausführungsform entsteht beim Erzeugen der Zusammenbaugruppe eine Kavität zwischen den Bauteilen, die einen ersten Bereich umfasst, der im Wesentlichen zwischen dem ersten Abschnitt des ersten Bauteil und dem zweiten Bauteil verläuft und einen zweiten Bereich umfasst, der im Wesentlichen zwischen dem zweiten Abschnitt des ersten Bauteils verläuft.

Die erste Klebstoffverbindung wird in dem ersten Bereich der Kavität und die zweite Klebstoffverbindung in dem zweiten Bereich der Kavität erzeugt .

Auch in diesem Verfahren hat das zweite Bauteil einen Durchbruch, wobei zur Erzeugung der ersten Klebstoffverbindung ein Klebstoff durch den Durchbruch hindurch in den ersten Bereich der Kavität eingebracht wird. Darüber hinaus weist das erste Bauteil einen Durchbruch auf, wobei zur Erzeugung der zweiten Klebstoffverbindung ein Klebstoff durch diesen Durchbruch in den zweiten Bereich der Kavität eingebracht wird. Zuerst wird die erste Klebstoffverbindung und danach die zweite Klebstoffverbindung erzeugt.

Der erste Bereich der Kavität liegt auf einer Seite des zweiten Bauteils, die dem Durchbruch des ersten Bauteils abgewandt ist.

Nachfolgend soll die Erfindung anhand der Figurenbeschreibung näher erläutert werden. Die Beschreibung, die Ansprüche und die Zeichnungen zeigen eine Vielzahl von Merkmalen, die ein Fachmann auch in anderer Kombination in Betracht ziehen würde, um die Erfindung an entsprechende Anwendungen anzupassen.

Es zeigen in schematischer Darstellung:
- Figur 1: eine perspektivische Darstellung einer Baugruppe als Explosionszeichnung,
- Figur 2: eine perspektivische Darstellung der Baugruppe in zusammengesetztem Zustand,
- Figuren 3a bis 3f: einzelne Verfahrensschritte zur Herstellung der Baugruppe.

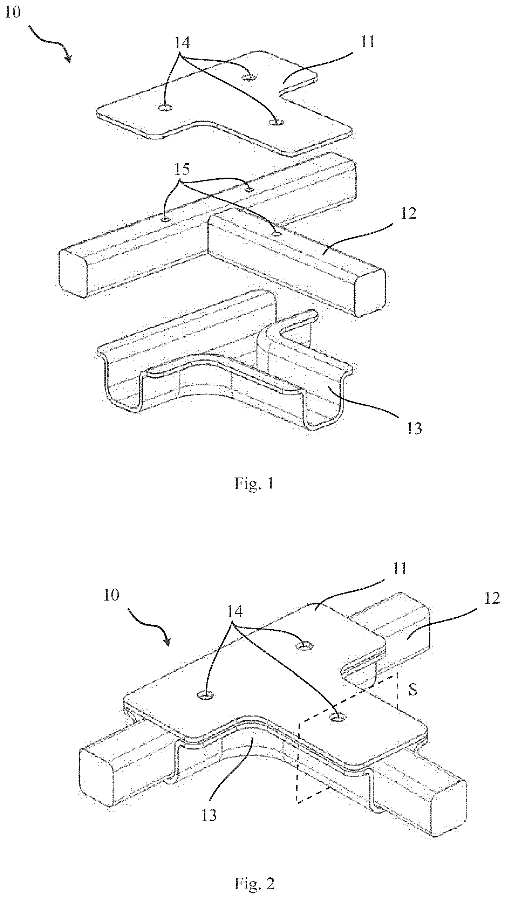

Figur 1 zeigt eine Baugruppe 10 in Explosionsdarstellung. Diese Baugruppe 10 umfasst ein erstes Bauteil 11, ein zweites Bauteil 12 und ein drittes Bauteil 13, die alle im Wesentlichen T-förmig ausgebildet sind. Das erste Bauteil 11 ist als flaches, dünnwandiges Blech ausgebildet, in dem drei Durchbrüche 14 vorgesehen sind. Das zweite Bauteil 12 ist aus Vierkantprofilen ausgebildet, die hier beispielhaft als Vollmaterial ausgebildet sind. Selbstverständlich können in alternativen Formen die Profile des zweiten Bauteils 12 auch hohl ausgebildet sein. Das zweite Bauteil 12 umfasst ebenfalls drei Durchbrüche 15, welche sich vollständig durch das Bauteil 12 hindurchziehen, und zwar von einer Oberfläche des Bauteils 12, die dem ersten Bauteil 11 zugewandt ist, zu einer in Figur 1 nicht sichtbaren Oberfläche des Bauteils 12, die dem dritten Bauteil 13 zugewandt ist. Das dritte Bauteil 13 ist in Schalenbauweise ausgebildet, beispielhaft mit einem U-förmigen Querschnittsprofil. In einem ersten Verfahrensschritt zur Herstellung der Bauteilgruppe werden die einzelnen Bauteile 11, 12 und 13 zueinander ausgerichtet. Dabei wird das zweite Bauteil 12 in die profilierte Vertiefung des dritten Bauteils 13 eingeschoben und mit dem ersten Bauteil 11 abgedeckt. Die dabei entstehende Zwischenbaugruppe 10 ist in Figur 2 dargestellt. Diese Zwischenbaugruppe 10 ist eine Vorstufe der Baugruppe 10' und unterscheidet sich von der Baugruppe dadurch, dass Bauteile 11, 12, 13 noch nicht miteinander verklebt sind. Die Durchbrüche 14, 15 sind beispielhaft als Durchgangsbohrungen dargestellt, wobei sie in speziellen Ausführungsformen der Erfindung auch andere Querschnittsformen aufweisen können.

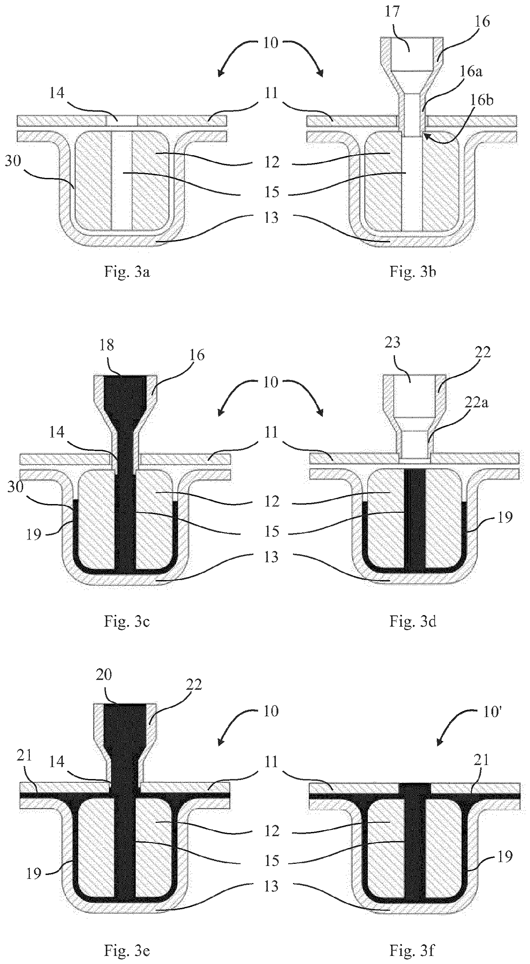

Die weiteren Verfahrensschritte zur Herstellung der fertigen Baugruppe 10' sind in den Figuren 3a bis 3f dargestellt. Diese Figuren entsprechen einer Schnittdarstellung durch die Zusammenbaugruppe 10 aus Figur 2 entlang der Schnittebene S. Wie aus Figur 3a ersichtlich ist, sind der Durchbruch 14 des ersten Bauteils 11 und der Durchbruch 15 des zweiten Bauteils 12 zueinander fluchtend ausgerichtet. In der Zusammenbaugruppe 10 ist zwischen den Bauteilen 11, 12, 13 eine Kavität 30 ausgebildet.

In einem folgenden Verfahrensschritt wird ein erster Injektor 16 bzw. eine erste Düse 16 auf die Zusammenbaugruppe 10 aufgesetzt. Diese Düse 16 umfasst einen Auslasskanal 16a durch den ein Injektorkanal 17 verläuft. Der Auslasskanal 16a kann durch die Öffnung bzw. durch den Durchbruch 14 des ersten Bauteils 11 hindurchgeführt werden und auf das zweite Bauteil 12 aufgesetzt werden. Dabei schließt der Auslass 16a im Wesentlichen bündig mit einer Einlassöffnung des Durchbruchs 15 im zweiten Bauteil 12 ab. Vorteilhafterweise kann der Einlasskanal 16a, wie in Figur 3b dargestellt, an seinem vordersten Ende einen Absatz 16b aufweisen, dessen Außendurchmesser im Wesentlichen dem Innendurchmesser des Durchbruchs 15 entspricht. Dadurch kann der Auslasskanal 16a geringfügig in den Durchbruch 15 hineinragen und eine gute Abdichtung des Injektionskanals 17 gegenüber dem zweiten Bereich der Kavität 30 erzielt werden.

Nach dem Aufsetzen des ersten Injektors 16 wird über den Injektorkanal 17 des ersten Injektors 16 eine Klebstoffmasse bzw. ein Klebstoff, insbesondere ein Zweikomponentenklebstoff, injiziert. Der Klebstoff fließt dabei durch den Auslass 16a hindurch, in den Durchbruch 15 hinein, durchströmt den Durchbruch 15 und befüllt einen ersten Bereich 19 der Kavität 30. Dieser Verfahrensschritt ist in Figur 3c dargestellt. Wie daraus ersichtlich ist, strömt der Klebstoff von einer figürlich oberen Seite in den Durchbruch 15 hinein und auf einer unteren Seite des Durchbruchs 15 hinaus, wobei er den unteren Bereich der Kavität 30 füllt und seitlich in dem Spalt der Kavität zwischen dem Bauteil 12 und dem Bauteil 13 aufsteigt. Somit wird die erste Klebstoffschicht bzw. die erste Klebstoffverbindung 19 erzeugt. Die in den Figur 3c und 3d gezeigte Klebstoffverbindung 19 befindet sich in dem ersten Bereich der Kavität 30, so dass die Bezugsziffer 19 im Wesentlichen den ersten Bereich der Kavität 30 bezeichnet. Nach dem Erzeugen der ersten Klebstoffschicht 19 wird der erste Injektor 16 von der Zusammenbaugruppe 10 entfernt.

Danach wird, wie in Figur 3d dargestellt, ein zweiter Injektor 22 auf die Zusammenbaugruppe aufgesetzt. Dieser hat einen Injektorauslasskanal 22a, der im Wesentlichen fluchtend mit dem Durchbruch 14 des ersten Bauteils 11 ausgerichtet wird. Analog zum ersten Injektor 16 weist vorteilhafterweise auch das vorderste Ende des Auslasskanals 22a des zweiten Injektors 22 einen Absatz 22b auf, dessen Außendurchmesser im Wesentlichen dem Innendurchmesser des Durchbruchs14 im ersten Bauteil entspricht. Dadurch kann eine Positionierung realisiert werden, bei der der Absatz den zweiten Injektor 22 in dem ersten Bauteil 11 zentriert positioniert und gleichzeitig eine gute Abdichtung gegenüber der Umgebung erzielt werden. Mit dem zweiten Injektor 22 bzw. mit einer zweiten Düse wird danach, wie in Figur 3e dargestellt, eine zweite Klebstoffschicht 21 bzw. eine zweite Klebstoffverbindung 21 erzeugt. Dabei wird Klebstoff 20 über den Injektorkanal 23 des zweiten Injektors durch den Auslass 22a des zweiten Injektors 22 injiziert. Die Klebstoffmasse dringt in den Bereich zwischen dem ersten Bauteil 11 und dem zweiten Bauteil 12 und füllt so einen zweiten Bereich 21 der Kavität 30 auf. Wie bereits oben mit Bezug zur ersten Klebverbindung 19 beschrieben, füllt die zweite Klebverbindung 21 einen zweiten Bereich 21 der Kavität 30 aus. Somit beziffert das Bezugszeichen 21 sowohl die zweite Klebeverbindung, wie auch im Wesentlichen den zweiten Bereich der Kavität 30.

Nach dem Abnehmen des zweiten Injektors 22 von der Zusammenbaugruppe 10 ist die Baugruppe 10' fertiggestellt, wobei die Klebstoffschichten 19 und 21 verfestigt sind. Das Endprodukt des Verfahrens ist in Figur 3f dargestellt.

Erfindungsgemäß kann somit ein zweistufiges Klebeverfahren realisiert werden, wobei in einer ersten Stufe ein Klebstoff mit einer kleinen Düse 16 durch das innere, zweite Bauteil 12 hindurch in einen ersten Bereich 19 der Kavität 30 injiziert wird, der auf einer abgewandten Seite des Ansetzpunktes der Düse 16 liegt. In einer zweiten Stufe wird der Klebstoff mit einer größeren Düse 22 in einen zweiten Bereich 21 der Kavität 30 injiziert, wobei der zweite Bereich 21 der Kavität 30 der größeren Düse 22 zugewandt ist. Zur Erzeugung der ersten Klebeschicht 19 und der zweiten Klebeschicht 21 können verschiedene oder gleiche Klebstoff verwendet werden. Bevorzugt wird die zweite Klebstoffschicht 21 innerhalb der Offenzeit der ersten Klebstoffschicht 19 injiziert, so dass eine gute Haftung auch zur ersten Klebstoffschicht 19 erzielt werden kann. Dieses Verfahren bietet Vorteile dahingehend, dass Lufteinschlüsse vermieden werden können, indem zuerst eine Klebstoffschicht auf einer abgewandten Seite des zweiten Bauteils 12 erzeugt wird und danach eine Klebstoffschicht auf der zugewandten Seite des Bauteils 12.

Darüber hinaus kann auch mit geringen Injektionsdrücken gearbeitet werden. Ferner bietet das Verfahren den Vorteil, dass nur ein einseitiger Zugang auf einer Seite der Zusammenbaugruppe 10 benötigt wird. Dies ist ein wesentlicher Vorteil im Karosseriebau, da der Injektionsroboter, d. h. der Roboterarm, der die Klebstoffzuführeinrichtung 16, 22 bewegt, nur auf einer Seite der Karosserie eine Zugänglichkeit benötigt.

In einer weiteren, nicht dargestellten Ausführungsform des Verfahrens können die kleine Injektordüse 16 und die große Injektordüse 22 als ein einziges Werkzeug ausgebildet sein. Dazu sind die Injektordüsen 16, 22 koaxial ausgerichtet, wobei die kleine Injektordüse 16 im Wesentlichen in dem Auslasskanal 22a der großen Injektordüse 22 eingesetzt ist. Die Injektordüsen 16, 22 können dabei zueinander translatorisch verschiebbar sein, entlang ihrer Längsachse bzw. entlang der Fließrichtung des Klebstoffs. Zur Befüllung der Kavität 30 mit Klebstoff wird somit analog zu dem in den Figuren 3a bis 3f beschriebenen Verfahren zunächst eine erste Klebstoffschicht 19 erzeugt, durch Injektion von Klebstoff über die erste Injektionsdüse 16. Danach wird die Injektionsdüse 16 ins Innere der Injektionsdüse 22 zurückgefahren. Der Auslasskanal 16a des ersten Injektors 16 muss dabei nur soweit zurückgezogen werden, dass ein prozesssicheres Aufsetzen des zweiten Injektors 22 auf das erste Bauteil 11 möglich ist. Anschließend wird die zweite Klebstoffschicht 21 erzeugt, indem der zweite Bereich 21 der Kavität 30 mit Klebstoff gefüllt wird.

In einer weiteren, figürlich nicht dargestellten, Ausführungsform umfasst die Baugruppe nur zwei Bauteile. Der Aufbau einer solchen Baugruppe entspricht dabei der in den Figuren 1, 2 und 3 dargestellten Baugruppe, wobei das erste Bauteil 11 und das dritte Bauteil 13 einstückig, d.h. integral ausgebildet sind und im Folgenden als erstes Bauteil bezeichnet werden. Das zweite Bauteil entspricht dabei dem Bauteil 12 aus den Figuren. Das erste Bauteil umfasst einen ersten Abschnitt 13', der im Wesentlichen der Form und der Position des dritten Bauteils 13 in den Figuren 1 bis 3 entspricht. Darüber hinaus weist das erste Bauteil einen zweiten Abschnitt 11' auf, der in seiner Position und seiner Form im Wesentlichen dem ersten Bauteil 11 aus den Figuren entspricht. Zur Herstellung einer solchen Baugruppe wird zuerst eine Zusammenbaugruppe aus dem ersten Bauteil und dem zweiten Bauteil erzeugt, wobei die Bauteile in einer vorbestimmten Position zueinander angeordnet werden. In dieser Ausführungsform umschließt das zweite Bauteil das erste Bauteil in Umfangsrichtung. Ein Zusammenbau analog zu den Figuren 1 und 2 ist damit nicht möglich. Stattdessen wird das zweite Bauteil in das erste Bauteil eingeschoben, bis es eine vorbestimmte Position erreicht. In dieser Position sind ein oder mehrere Durchbrüche 15 in dem zweiten Bauteil zu einem oder mehreren Durchbrüchen 14 in dem ersten Bauteil fluchtend ausgerichtet.

Analog zu der oben beschriebenen Ausführungsform wird auch hier eine erste Klebstoffverbindung erzeugt zwischen einem ersten Abschnitt 13' des ersten Bauteils und dem zweiten Bauteil. Wenn der Klebstoff 14 mit einem Injektor 16 auf einer Seite des zweiten Bauteils 12 eingebracht wird, so wird eine erste Klebstoffverbindung auf der gegenüberliegenden Seite des Bauteils 12 erzeugt. Ebenfalls analog zur oben beschriebenen Ausführungsform wird eine zweite Klebstoffverbindung zwischen einem zweiten Abschnitt des ersten Bauteils und dem zweiten Bauteil 12. Diese Klebstoffverbindung liegt dann auf einer Seite der Bauteils 12, die dem Injektor 22 zugewandt ist.

Alle im Vorhergehenden beschriebenen Ausführungsformen bieten den Vorteil einer geringen Taktzeit bzw. einer hohen Taktfrequenz. Dieses Klebeverfahren eignet sich insbesondere bei Bauteilen aus faserverstärktem Kunststoff, beispielsweise glasfaserverstärkten Kunststoffbauteilen oder kohlenstofffaserverstärkten Kunststoffbauteilen. Die Verstärkungsfasern können organische oder anorganische Verstärkungsfasern sein. Die Verstärkungsfasern können beispielsweise Kohlenstofffasern sein. Diese bilden mit der Kunststoffmatrix einen kohlenstofffaserverstärkten Kunststoff, auch CFK (Carbon-faserverstärkter Kunststoff; englisch ,,Carbon-Fiber-Reinforced Plastic", CFRP) genannt. Das zugehörige FVK-Bauteil ist dann ein CFK- Bauteil. Die Verstärkungsfasern können beispielsweise auch Glasfasern sein. Diese bilden mit der Kunststoffmatrix einen glasfaserverstärkten Kunststoff, auch GFK genannt. Das zugehörige FVK-Bauteil ist dann ein GFK-Bauteil. Jedoch ist die Erfindung nicht darauf beschränkt, und die Verstärkungsfasern können z.B. auch Aramidfasern, Polyester-Fasern, Nylon-Fasern, Polyethylen-Fasern, PMMA-Fasern, Basaltfasern, Borfasern, Keramikfasern, Kieselsäurefasern, Stahl-Fasern und/oder Naturfasern sein. Recyclingfasern. Das Material der Kunststoffmatrix mag insbesondere ein oder mehrere thermoplastische Kunststoffe (Thermoplaste) und/oder duroplastische Kunststoffe (Duroplaste) aufweisen. Faserverstärkte Kunststoffe mit einer thermoplastischen Matrix weisen den Vorteil auf, dass sie sich nachträglich umformen oder verschweißen lassen. Als thermoplastische Kunststoffe eignen sich beispielsweise: Polyetheretherketon (PEEK), Polyphenylensulfid (PPS), Polysulfon (PSU), Polyetherimid (PEI) und/oder Polytetrafluorethen (PTFE). Faserverstärkte Kunststoffe mit einer duroplastischen Matrix lassen sich nach dem Aushärten bzw. dem Vernetzen der Matrix nicht mehr umformen. Sie weisen vorteilhafterweise einen hohen Temperatureinsatzbereich auf. Dies gilt besonders für heißhärtende Systeme, die unter hohen Temperaturen ausgehärtet werden. Faserverstärkte Kunststoffe mit duroplastischer Matrix weisen meist die höchsten Festigkeiten auf. Als duroplastische Kunststoffe bzw. Matrix können z.B. folgende Harze zur Anwendung kommen: Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR), Aminoharze, Melaminharz (MF/MP) und/oder Harnstoffharz (UF). Selbstverständlich kann das Verfahren auch zum Verkleben von Bauteilen aus anderen Materialien verwendet werden. Das Klebeverfahren bietet Vorteile dahingehend, dass ein guter Materialmix in der Zusammenbaugruppe realisiert werden kann, wobei Bauteile aus Holz, Metall, Keramik und/oder Kunststoff miteinander verklebt werden können.

Im Vorhergehenden wurde Klebstoff als Materials zur Herstellung einer Klebstoffverbindung beschrieben. Bei diesen Klebstoffverbindungen werden die zu verbindenden Bauteile durch Adhäsion miteinander verbunden. Im Sinne der Erfindung sind jedoch auch Gussmassen unter den Begriff Klebstoff zu subsummieren. Solche Gussmassen werden ebenfalls in flüssiger oder teigartiger Form in die Kavität eingebracht. Nach der Aushärtung der Gussmasse ergibt sich eine formschlüssige Verbindung zwischen den Bauteilen. Adhäsionskräfte spielen dabei eine untergeordnete Rolle.

### Bezugszeichenliste

- 10: Baugruppe
- 11: erstes Bauteil
- 12: zweites Bauteil
- 13: drittes Bauteil
- 14: Durchbruch des ersten Bauteils
- 15: Durchbruch des zweiten Bauteils
- 16: erster Injektor
- 17: Injektorkanal des ersten Injektors
- 18: erster Klebstoff
- 19: erste Klebstoffschicht
- 20: zweiter Klebstoff
- 21: zweite Klebstoffschicht
- 22: zweiter Injektor
- 23: Injektorkanal des zweiten Injektors

## Patentansprüche

1. Verfahren zur Herstellung einer Baugruppe (10'), umfassend zumindest drei Bauteile (11, 12, 13), mit den Schritten:
- Erzeugen einer Zusammenbaugruppe (10) aus einem ersten Bauteil (11), einem zweiten Bauteil (12) und einem dritten Bauteil (13), wobei die drei Bauteile (11, 12, 13) in einer vorbestimmten Position zueinander angeordnet sind, wobei beim Erzeugen der Zusammenbaugruppe (10) eine Kavität (30) zwischen den Bauteilen (11, 12, 13) entsteht, die einen ersten Bereich umfasst, der im Wesentlichen zwischen dem zweiten Bauteil (12) und dem dritten Bauteil (13) verläuft und einen zweiten Bereich umfasst, der im Wesentlichen zwischen dem zweiten Bauteil (12) und dem ersten Bauteil (11) verläuft,
- Erzeugen einer ersten Klebstoffverbindung (19) zwischen dem zweiten Bauteil (12) und dem dritten Bauteil (13), und
- Erzeugen einer zweiten Klebstoffverbindung (21) zwischen dem ersten Bauteil (11) und dem zweiten Bauteil (12),
**dadurch gekennzeichnet, dass**
das zweite Bauteil (12) einen Durchbruch (15) aufweist und dass zur Erzeugung der ersten Klebstoffverbindung (19) ein Klebstoff durch den Durchbruch (15) hindurch in den ersten Bereich der Kavität eingebracht wird und, dass
das erste Bauteil (11) einen Durchbruch (14) aufweist, wobei zur Erzeugung der zweiten Klebstoffverbindung (21) ein Klebstoff durch den Durchbruch (14) in den zweiten Bereich (21) der Kavität eingebracht wird, wobei zuerst die erste Klebstoffverbindung (19) und danach die zweite Klebstoffverbindung (21) erzeugt wird.

2. Verfahren nach Anspruch 1, **dadurch gekennzeichnet, dass** die erste Klebstoffverbindung (19) in dem ersten Bereich der Kavität erzeugt wird und die zweite Klebstoffverbindung (21) in dem zweiten Bereich der Kavität erzeugt wird.

3. Verfahren nach einem der Patentansprüche 1 oder 2, **dadurch gekennzeichnet, dass**
der erste Bereich (19) der Kavität auf einer Seite des zweiten Bauteils (12) liegt, die dem ersten Bauteil (11) abgewandt ist.

4. Verfahren nach einem der Patentansprüche 1 bis 3, **dadurch gekennzeichnet, dass**
der zweite Bereich (21) der Kavität auf einer Seite des zweiten Bauteils (12) liegt, die dem ersten Bauteil (11) zugewandt ist.

5. Verfahren zur Herstellung einer Baugruppe, umfassend zumindest zwei Bauteile, mit den Schritten:
- Erzeugen einer Zusammenbaugruppe aus einem ersten Bauteil und einem zweiten Bauteil, wobei die Bauteile in einer vorbestimmten Position zueinander angeordnet sind, wobei beim Erzeugen der Zusammenbaugruppe eine Kavität (30) zwischen den Bauteilen entsteht, die einen ersten Bereich (19) umfasst, der im Wesentlichen zwischen dem ersten Abschnitt (13') des ersten Bauteil und dem zweiten Bauteil (11') verläuft und einen zweiten Bereich (21) umfasst, der im Wesentlichen zwischen dem zweiten Abschnitt (11') des ersten Bauteils und dem zweiten Bauteil verläuft,
- Erzeugen einer ersten Klebstoffverbindung (19) zwischen einem ersten Abschnitt (13') des ersten Bauteils und dem zweiten Bauteil (12), und
- Erzeugen einer zweiten Klebstoffverbindung (21) zwischen einem zweiten Abschnitt (11') des ersten Bauteil und dem zweiten Bauteil (12),
**dadurch gekennzeichnet, dass**
- das zweite Bauteil (12) einen Durchbruch (15) aufweist und zur Erzeugung der ersten Klebstoffverbindung (19) ein Klebstoff durch den Durchbruch (15) hindurch in den ersten Bereich der Kavität eingebracht wird, und
- das erste Bauteil einen Durchbruch (14) aufweist, und zur Erzeugung der zweiten Klebstoffverbindung (21) ein Klebstoff durch den Durchbruch (14) in den zweiten Bereich (21) der Kavität eingebracht wird, wobei zuerst die erste Klebstoffverbindung (19) und danach die zweite Klebstoffverbindung (21) erzeugt wird.

6. Verfahren nach Anspruch 5, **dadurch gekennzeichnet, dass** die erste Klebstoffverbindung (19) in dem ersten Bereich der Kavität erzeugt wird und die zweite Klebstoffverbindung (21) in dem zweiten Bereich der Kavität erzeugt wird.

7. Verfahren nach einem der Patentansprüche 5 bis 6, **dadurch gekennzeichnet, dass**
der erste Bereich (19) der Kavität auf einer Seite des zweiten Bauteils (12) liegt, die dem Durchbruch (14) des ersten Bauteils (11') abgewandt ist.

## Claims

1. Method for producing an assembly (10'), comprising at least three components (11, 12, 13), said method having the steps of:
- producing an intermediate assembly (10) from a first component (11), a second component (12) and a third component (13), wherein the three components (11, 12, 13) are arranged in a predetermined position with respect to one another, wherein, during production of the intermediate assembly (10), a cavity (30) is created between the components (11, 12, 13) which comprises a first region, which extends substantially between the second component (12) and the third component (13), and comprises a second region, which extends substantially between the second component (12) and the first component (11),
- producing a first adhesive connection (19) between the second component (12) and the third component (13), and
- producing a second adhesive connection (21) between the first component (11) and the second component (12),
**characterized in that**
the second component (12) has an aperture (15) and **in that**, in order to produce the first adhesive connection (19), an adhesive is introduced into the first region of the cavity through the aperture (15), and **in that**
the first component (11) has an aperture (14), wherein, in order to produce the second adhesive connection (21), an adhesive is introduced into the second region (21) of the cavity through the aperture (14), wherein first of all the first adhesive connection (19) is produced and then the second adhesive connection (21).

2. Method according to Claim 1, **characterized in that** the first adhesive connection (19) is produced in the first region of the cavity and the second adhesive connection (21) is produced in the second region of the cavity.

3. Method according to either of Patent Claims 1 and 2, **characterized in that**
the first region (19) of the cavity is located on a side of the second component (12) that faces away from the first component (11).

4. Method according to one of Patent Claims 1 to 3,
**characterized in that**
the second region (21) of the cavity is located on a side of the second component (12) that faces the first component (11).

5. Method for producing an assembly, comprising at least two components, said method having the steps of:
- producing an intermediate assembly from a first component and a second component, wherein the components are arranged in a predetermined position with respect to one another, wherein, during production of the intermediate assembly, a cavity (30) is created between the components which comprises a first region (19), which extends substantially between the first portion (13') of the first component and the second component (11'), and comprises a second region (21), which extends substantially between the second portion (11') of the first component and the second component,
- producing a first adhesive connection (19) between a first portion (13') of the first component and the second component (12), and
- producing a second adhesive connection (21) between a second portion (11') of the first component and the second component (12),
**characterized in that**
- the second component (12) has an aperture (15) and, in order to produce the first adhesive connection (19), an adhesive is introduced into the first region of the cavity through the aperture (15), and
- the first component has an aperture (14) and, in order to produce the second adhesive connection (21), an adhesive is introduced into the second region (21) of the cavity through the aperture (14), wherein first of all the first adhesive connection (19) is produced and then the second adhesive connection (21).

6. Method according to Claim 5, **characterized in that** the first adhesive connection (19) is produced in the first region of the cavity and the second adhesive connection (21) is produced in the second region of the cavity.

7. Method according to one of Patent Claims 5 to 6,
**characterized in that**
the first region (19) of the cavity is located on a side of the second component (12) that faces away from the aperture (14) of the first component (11').

## Revendications

1. Procédé de fabrication d'un module (10'), comportant au moins trois composants (11, 12, 13), comprenant les étapes suivantes :
- la production d'un module assemblé (10) à partir d'un premier composant (11), d'un deuxième composant (12) et d'un troisième composant (13), les trois composants (11, 12, 13) étant agencés les uns par rapport aux autres dans une position prédéterminée ; lors de la production du module assemblé (10), une cavité (30) étant formée entre les composants (11, 12, 13), qui comporte une première zone, qui s'étend essentiellement entre le deuxième composant (12) et le troisième composant (13), et une deuxième zone, qui s'étend essentiellement entre le deuxième composant (12) et le premier composant (11),
- la production d'une première liaison par adhésif (19) entre le deuxième composant (12) et le troisième composant (13), et
- la production d'une deuxième liaison par adhésif (21) entre le premier composant (11) et le deuxième composant (12),
**caractérisé en ce que**
le deuxième composant (12) comprend une percée (15) et **en ce que**, pour la production de la première liaison par adhésif (19), un adhésif est introduit à travers la percée (15) dans la première zone de la cavité et, **en ce que**
le premier composant (11) comprend une percée (14) ; pour la production de la deuxième liaison par adhésif (21), un adhésif étant introduit à travers la percée (14) dans la deuxième zone (21) de la cavité, la première liaison par adhésif (19) étant tout d'abord produite, et ensuite la deuxième liaison par adhésif (21) .

2. Procédé selon la revendication 1, **caractérisé en ce que** la première liaison par adhésif (19) est produite dans la première zone de la cavité et la deuxième liaison par adhésif (21) est produite dans la deuxième zone de la cavité.

3. Procédé selon l'une quelconque des revendications 1 ou 2, **caractérisé en ce que** la première zone (19) de la cavité se situe sur un côté du deuxième composant (12) qui est détourné du premier composant (11).

4. Procédé selon l'une quelconque des revendications 1 à 3, **caractérisé en ce que** la deuxième zone (21) de la cavité se situe sur un côté du deuxième composant (12) qui est tourné vers le premier composant (11).

5. Procédé de fabrication d'un module, comportant au moins deux composants, comprenant les étapes suivantes :
- la production d'un module assemblé à partir d'un premier composant et d'un deuxième composant, les composants étant agencés l'un par rapport à l'autre dans une position prédéterminée ; lors de la production du module assemblé, une cavité (30) étant formée entre les composants, qui comporte une première zone (19), qui s'étend essentiellement entre la première section (13') du premier composant et le deuxième composant (11'), et qui comporte une deuxième zone (21), qui s'étend essentiellement entre la deuxième section (11') du premier composant et le deuxième composant,
- la production d'une première liaison par adhésif (19) entre une première section (13') du premier composant et le deuxième composant (12), et
- la production d'une deuxième liaison par adhésif (21) entre une deuxième section (11') du premier composant et le deuxième composant (12),
**caractérisé en ce que**
- le deuxième composant (12) comprend une percée (15) et, pour la production de la première liaison par adhésif (19), un adhésif est introduit à travers la percée (15) dans la première zone de la cavité, et
- le premier composant comprend une percée (14) et, pour la production de la deuxième liaison par adhésif (21), un adhésif est introduit à travers la percée (14) dans la deuxième zone (21) de la cavité, la première liaison par adhésif (19) étant tout d'abord produite, et ensuite la deuxième liaison par adhésif (21).

6. Procédé selon la revendication 5, **caractérisé en ce que** la première liaison par adhésif (19) est produite dans la première zone de la cavité et la deuxième liaison par adhésif (21) est produite dans la deuxième zone de la cavité.

7. Procédé selon l'une quelconque des revendications 5 à 6, **caractérisé en ce que** la première zone (19) de la cavité se situe sur un côté du deuxième composant (12) qui est détourné de la percée (14) du premier composant (11').
